# EUROPEAN PATENT APPLICATION

(11) **EP 4 852 218 A1**
(43) Date of publication of application: **09.12.2026**
(21) Application number: 24928237.7
(22) Date of filing: 24.12.2024
(51) Int. Cl.: H01Q 1/24, H01Q 1/27

(54) **ELECTRONIC DEVICE**

(30) Priority: 05.03.2024 CN 202410253525
(71) Applicant: Honor Device Co., Ltd., Shenzhen, Guangdong 518040 (CN)
(72) Inventor: WANG, Yu, Shenzhen, Guangdong 518040 (CN); QU, Zengchao, Shenzhen, Guangdong 518040 (CN); WANG, Yan, Shenzhen, Guangdong 518040 (CN)
(74) Representative: Henselmann, Alexander Gerhard
(86) International application number: PCT/CN2024/142011
(87) International publication number: WO 2025/185308

(57) **Abstract**

This application provides an electronic device, relates to the field of terminal device technologies, and is used to resolve a problem that improper antenna distribution in an existing electronic device affects radiation efficiency of antennas, and further affects communication performance of the electronic device. The foregoing electronic device includes a back cover, an outer decorative cover, an inner decorative cover, a first radiator, and a circuit board. The back cover is provided with an installation hole. The outer decorative cover is arranged at the installation hole and is arranged on an outer side of the back cover. The inner decorative cover is arranged at the installation hole and arranged on an inner side of the back cover. The first radiator is arranged on a surface of the inner decorative cover away from the outer decorative cover. The circuit board is arranged on the inner side of the back cover, and the first radiator is electrically connected to the circuit board.

## Description

This application claims priority to Chinese Patent Application No. 202410253525.X, filed with the China National Intellectual Property Administration on March 5, 2024 and entitled "ELECTRONIC DEVICE", which is incorporated herein by reference in its entirety.

### TECHNICAL FIELD

Embodiments of this application relate to the field of terminal devices, and in particular, to an electronic device.

### BACKGROUND

Electronic devices are indispensable devices, such as mobile phones or tablet computers, in daily life. Currently, an electronic device has an increasing quantity of communication bands. A plurality of antennas need to be arranged in the electronic device, to implement communication in different bands. However, existing mainboard holder antennas and frame antennas can no longer satisfy proper distribution of a plurality of antennas. Consequently, radiation efficiency of the antennas is affected, and communication performance of the electronic device is further affected.

### SUMMARY

Embodiments of this application provide an electronic device, to resolve a problem that improper antenna distribution in an existing electronic device affects radiation efficiency of antennas, and further affects communication performance of the electronic device.

To achieve the foregoing objective, the following technical solutions are used in embodiments of this application.

An embodiment of this application provides an electronic device. The electronic device includes a back cover, an outer decorative cover, an inner decorative cover, a first radiator, and a circuit board. The back cover is provided with an installation hole. The outer decorative cover is arranged at the installation hole and arranged on an outer side of the back cover. The inner decorative cover is arranged at the installation hole and arranged on an inner side of the back cover. The first radiator is arranged on a surface of the inner decorative cover away from the outer decorative cover. The circuit board is arranged on the inner side of the back cover, and the first radiator is electrically connected to the circuit board.

In the electronic device provided in this application, the first radiator is arranged on a surface of the inner decorative cover away from the outer decorative cover. A clearance region of the first radiator can be ensured. To be specific, a clearance region is formed between the first radiator and the circuit board and between the first radiator and the outer decorative cover. In addition, if the first radiator is arranged on the inner decorative cover, the first radiator does not need to occupy an area on the circuit board, which can save a usable area on the circuit board and facilitate arrangement of another electronic element on the circuit board.

In a possible implementation of this application, the outer decorative cover includes a metal part and a plastic part. The metal part is fixedly connected to the plastic part. A vertical projection of the metal part on the circuit board at least partially overlaps with a vertical projection of the first radiator on the circuit board. In this way, the first radiator can spatially communicate with the metal distribution, to transfer electromagnetic wave energy to the metal part, and radiate the electromagnetic wave energy to the surroundings through the metal part. That is, the metal part forms a new radiator, thereby improving radiation efficiency of the antennas.

In a possible implementation of this application, along a thickness direction of the electronic device, a distance between the first radiator and the outer decorative cover is a first distance, and the first distance is greater than 0 and less than or equal to 0.15, where is a wavelength in a medium. Under this structure, that the first distance falls within the range enables the first radiator to be spatially coupled to the metal part of the outer decorative cover, which is beneficial to improving reliability of the overall structure.

In a possible implementation of this application, the first distance is greater than or equal to 0.02, and less than or equal to 0.15.

In a possible implementation of this application, a surface of the inner decorative cover facing the circuit board is a first surface, and the first radiator is arranged on the first surface and is located on a side close to an outer edge of the outer decorative cover. For example, the first distance may be 2 mm, and is about 0.06.

In a possible implementation of this application, the electronic device further includes an electrical connector. The electrical connector is abutted between the first radiator and the circuit board. For example, the electrical connector may be an elastic sheet, a wire, another electrical connection structure, or the like.

In a possible implementation of this application, the electronic device further includes a metal block. The metal block is fixed to a surface of the first radiator facing the circuit board, and the electrical connector is abutted between the metal block and the circuit board. Under this structure, the distance between the first radiator and the circuit board can be reduced. When the electrical connector is abutted between the metal block and the circuit board, it is beneficial to reducing a volume of the electrical connector, thereby reducing an area occupied by the electrical connector on the circuit board.

In a possible implementation of this application, the electronic device further includes a heightening plate. The heightening plate is arranged on a surface of the circuit board facing the inner decorative cover, the heightening plate is electrically connected to the circuit board, and the electrical connector is abutted between the heightening plate and the first radiator. Under this structure, a local thickness of the circuit board is increased through the heightening plate, that is, the distance between the circuit board and the first radiator is reduced, which is beneficial to reducing a volume of the electrical connector.

In a possible implementation of this application, the first radiator includes an FPC board. The FPC board is fixed to the surface of the inner decorative cover away from the outer decorative cover. For example, the FPC board may be fixed to the inner decorative cover by adhesive fixing.

In a possible implementation of this application, the first radiator further includes a reinforcing plate. The reinforcing plate is arranged between the FPC board and the inner decorative cover. Under this structure, the FPC board can be supported, to improve the overall strength.

In a possible implementation of this application, a plurality of limiting protrusions are arranged on the inner decorative cover. The FPC board and the reinforcing plate are each provided with a plurality of limiting holes, the plurality of limiting holes are arranged in a one-to-one correspondence with the plurality of limiting protrusions, and the limiting protrusions extend into the corresponding limiting holes. In this way, the FPC board can be accurately positioned through corresponding installation of the limiting protrusions and the limiting holes, which is beneficial to improving installation precision.

In a possible implementation of this application, the first radiator includes a steel sheet. The steel sheet is arranged on the inner decorative cover. For example, the steel sheet may be embedded in the inner decorative cover.

In a possible implementation of this application, the first radiator includes a metal layer. The metal layer is arranged on the surface of the inner decorative cover away from the outer decorative cover. For example, the metal layer may be formed on the inner surface of the inner decorative cover through an LDS (Laser Direct structuring, laser direct structuring) process.

In a possible implementation of this application, a plurality of first radiators are arranged, and the plurality of first radiators are distributed at intervals along a circumferential direction of the installation hole. Under this structure, a plurality of antennas may be arranged on the inner decorative cover, so that the antenna distribution is more proper.

In a possible implementation of this application, the electronic device further includes a second radiator. The second radiator is arranged on an inner surface of the back cover, and a vertical projection of the second radiator on the circuit board at least partially overlaps with the vertical projection of the first radiator on the circuit board. In this way, the first radiator can be further spatially coupled to the second radiator, so that the electromagnetic wave energy is coupled from the first radiator to the second radiator, and radiated to the outside of the back cover, which increases a radiation area of the antennas, thereby helping improve radiation efficiency of the antennas.

In a possible implementation of this application, the back cover includes a first region, a second region, and a bending region. The bending region is connected between the first region and the second region, the second region protrudes from an outer surface of the first region, the installation hole is arranged in the second region, both the outer decorative cover and the inner decorative cover are fixedly connected to the second region, and the second radiator is arranged on an inner surface of the second region. Under this structure, the second region and the inner decorative cover are arranged in a stacked manner, so that the vertical projections of the second radiator and the first radiator on the circuit board can overlap with each other.

In a possible implementation of this application, the second radiator extends to the bending region in a direction away from the installation hole. Under this structure, it is beneficial to further increasing the radiation area of the antennas, thereby further improving the radiation efficiency of the antennas.

In a possible implementation of this application, the second radiator extends to the first region in a direction away from the installation hole. Under this structure, it is beneficial to further increasing the radiation area of the antennas, thereby further improving the radiation efficiency of the antennas.

### BRIEF DESCRIPTION OF DRAWINGS

FIG. 1 is a diagram of a structure of an electronic device according to an embodiment of this application;
FIG. 2 is an exploded view of an electronic device according to an embodiment of this application;
FIG. 3 is a diagram of a structure of a circuit board holder according to an embodiment of this application;
FIG. 4 is an exploded view of a local structure of another electronic device according to an embodiment of this application;
FIG. 5 is a cross-sectional view of the local structure of the electronic device provided in FIG. 4;
FIG. 6 is a schematic diagram of simulation of an S-parameter and efficiency of a first radiator according to an embodiment of this application;
FIG. 7 is a schematic diagram of current distribution after a first radiator is coupled to a metal part of an outer decorative cover according to an embodiment of this application;
FIG. 8 is a diagram of a structure of a first radiator according to an embodiment of this application;
FIG. 9 is a diagram of a structure of another first radiator according to an embodiment of this application;
FIG. 10 is a diagram of a structure of still another first radiator according to an embodiment of this application;
FIG. 11 is a cross-sectional view of the first radiator provided in FIG. 10;
FIG. 12 is a diagram of a structure that a first FPC board is connected to a circuit board by an electrical connector according to an embodiment of this application;
FIG. 13 is a diagram of a structure that a first FPC board is connected to a circuit board by an elastic sheet according to an embodiment of this application;
FIG. 14 is a diagram of a structure that a first FPC board is connected to a circuit board by an elastic sheet and a metal block according to an embodiment of this application;
FIG. 15 is a cross-sectional view of that the first FPC board is connected to the circuit board by the elastic sheet and the metal block provided in FIG. 14;
FIG. 16 is a diagram of a structure that a first FPC board is connected to a circuit board by an elastic sheet and a heightening plate according to an embodiment of this application;
FIG. 17 is a diagram of a local structure of still another electronic device according to an embodiment of this application;
FIG. 18 is a cross-sectional view of a structure of a second radiator according to an embodiment of this application;
FIG. 19 is a cross-sectional view of a structure of another second radiator according to an embodiment of this application; and
FIG. 20 is a cross-sectional view of a structure of still another second radiator according to an embodiment of this application.

REFERENCE NUMERALS: 10-electronic device; 100-display module; 110-light-transmitting cover plate; 120-display; 200-housing; 210-back cover; 211-installation hole; 212-first region; 213-second region; 214-bending region; 220-frame; 230-middle plate; 300-circuit board; 400-circuit board holder; 500-outer decorative cover; 510-metal part; 520-plastic part; 600-inner decorative cover; 610-first surface; 620-limiting protrusion; 630-fixing boss; 700-first radiator; 710-first FPC board; 711-limiting hole; 712-first part; 713-second part; 714-connecting part; 720-reinforcing plate; 800-electrical connector; 810-elastic sheet; 820-metal block; 830-heightening plate; 900-second radiator.

### DESCRIPTION OF EMBODIMENTS

Technical solutions in embodiments of this application are described below with reference to accompanying drawings in embodiments of this application. Apparently, the described embodiments are merely some rather than all embodiments of this application.

Following terms "first" and "second" are merely used for description, and cannot be construed as indicating or implying relative importance or implicitly indicating a quantity of indicated technical features. Therefore, a feature defined by "first" or "second" can explicitly or implicitly includes one or more features.

In addition, in this application, orientation terms such as "upper" and "lower" are defined relative to orientations for schematic placement of components in the accompanying drawings. It should be understood that these directional terms are relative concepts, which are used for description and clarification relative to each other, and may change accordingly depending on changes in the orientations where the components are placed in the accompanying drawings.

In this application, unless otherwise explicitly specified and defined, the term "connection" should be understood in a broad sense. For example, the "connection" may be a fixed connection, a detachable connection, or an integral connection, or may be a direct connection, or an indirect connection through an intermediate medium.

Embodiments of this application provide an electronic device. Specifically, the electronic device may be a portable electronic device or another type of electronic device. For example, the electronic device may be a mobile phone, a tablet computer (tablet personal computer), a laptop computer (laptop computer), a personal digital assistant (personal digital assistant, PDA), a monitor, a camera, a personal computer, a notebook computer, a wearable device, or the like. For ease of description, description is provided throughout the following by using an example in which the electronic device is a mobile phone.

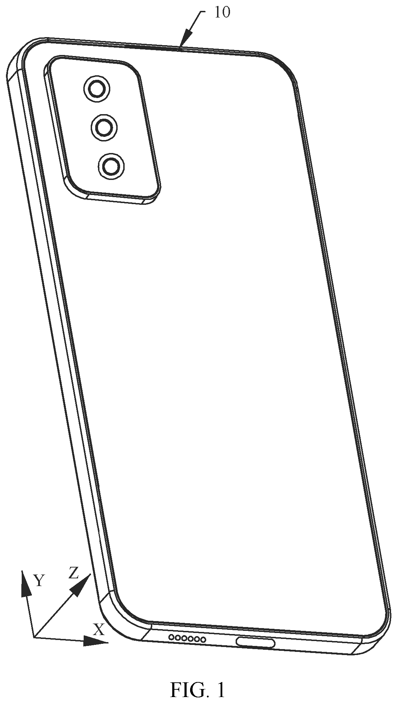

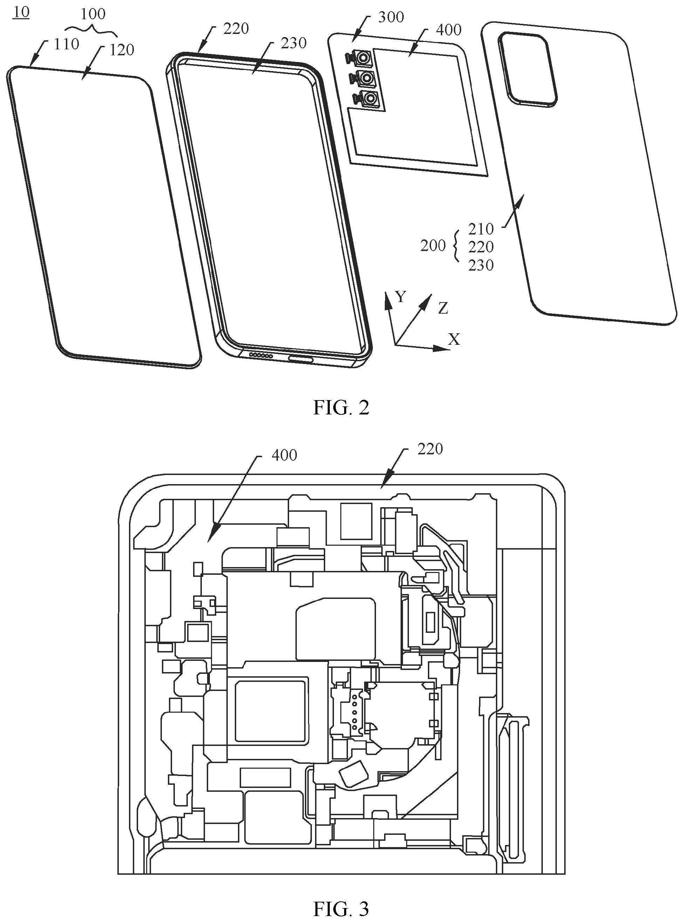

Referring to FIG. 1 and FIG. 2, FIG. 1 is a diagram of a structure of an electronic device 10 according to an embodiment of this application, and FIG. 2 is an exploded view of an electronic device 10 according to an embodiment of this application. In view of the above, in this embodiment, the electronic device 10 is a mobile phone, and the electronic device 10 may be a structure approximately in a shape of a rectangular plate. The electronic device 10 may include a display module 100, a housing 200, a circuit board 300, a circuit board holder 400, and the like.

For ease of description below, an XYZ coordinate system is established. A width direction of the electronic device 10 is defined as an X-axis direction, a length direction of the electronic device 10 is defined as a Y-axis direction, and a thickness direction of the electronic device 10 is defined as a Z-axis direction. It may be understood that the coordinate system of the electronic device 10 may be flexibly set based on an actual requirement. Only one example is provided in this application, which cannot be considered as a special limitation on this application. FIG. 1 and FIG. 2 only schematically show some components included in the electronic device 10. Actual shapes, actual sizes, actual positions, and actual structures of the components are not limited by FIG. 1 and FIG. 2.

The display module 100 is configured to display an image, a video, and the like. The display module 100 may include a light-transmitting cover plate 110 and a display 120 (English name: panel, also referred to as a display panel), and the light-transmitting cover plate 110 and the display 120 are arranged in a stacked manner. A material of the light-transmitting cover plate 110 includes, but is not limited to, glass. For example, the light-transmitting cover plate 110 may be an ordinary light-transmitting cover plate 110, configured to protect the display 120 to prevent the display 120 from being damaged by an external force, and can play a dustproof role. Alternatively, the light-transmitting cover plate 110 may be a light-transmitting cover plate 110 with a touch function, so that the electronic device 10 has a touch function, thereby making it more convenient for a user to use. Therefore, a specific material of the light-transmitting cover plate 110 is not specifically limited in this application.

In addition, the display 120 may be a flexible display or may be a rigid display. For example, the display 120 may be an organic light-emitting diode (organic light-emitting diode, OLED) display, an active-matrix organic light-emitting diode (active-matrix organic light-emitting diode, AMOLED) display, a mini light-emitting diode (mini light-emitting diode) display, a micro light-emitting diode (micro light-emitting diode) display, a micro organic light-emitting diode (micro organic light-emitting diode) display, a quantum dot light-emitting diode (quantum dot light emitting diodes, QLED) display, or a liquid crystal display (liquid crystal display, LCD).

The foregoing housing 200 is configured to protect electronic elements inside the electronic device 10. The housing 200 includes a back cover 210 and a frame 220. The back cover 210 is located on a side of the display 120 away from the light-transmitting cover plate 110, and is arranged together with the light-transmitting cover plate 110 and the display 120 in a stacked manner. The frame 220 is located between the light-transmitting cover plate 110 and the back cover 210. The frame 220 is fixed to the back cover 210. For example, the frame 220 may be fixed to the back cover 210 by adhesion, screwing, welding, snap-fitting, or the like. Alternatively, the frame 220 and the back cover 210 may be an integrally formed structure. That is, the frame 220 and the back cover 210 form an integral structural member. The light-transmitting cover plate 110 may be fixed to the frame 220 by adhesion, so that the light-transmitting cover plate 110, the back cover 210, and the frame 220 enclose an accommodating cavity inside the electronic device 10. Components and electronic elements of the circuit board 300 are all arranged in the accommodating cavity.

In some embodiments, the housing 200 may further include a middle plate 230. The middle plate 230 is arranged in the accommodating cavity, and the middle plate 230 is located on a side of the display 120 away from the light-transmitting cover plate 110. The middle plate 230 is fixedly connected to the frame 220, to form a middle frame of the electronic device 10. For example, the middle plate 230 may be fixedly connected to the frame 220 by adhesion, screwing, welding, snap-fitting, or the like. Alternatively, the middle plate 230 and the frame 220 may be an integrally formed structure. That is, the middle plate 230 and the frame 220 form an integral structural member. The middle plate 230 divides the accommodating cavity into two spaces independent of each other. One space is located between the light-transmitting cover plate 110 and the middle plate 230, and the display 120 is located in the space. The other space is located between the middle plate 230 and the back cover 210, and the components of the circuit board 300 are located in the space.

The circuit board 300 is configured for arranging the electronic elements inside the electronic device 10 and implementing electrical connections between the electronic elements. The circuit board 300 may be fixed to the middle plate 230 by adhesion, screwing, welding, snap-fitting, or the like. Therefore, a fixing manner of the circuit board 300 is not specifically limited in this application.

For example, the electronic elements may include a control chip (for example, a system on chip, System on Chip, SOC), a graphics control chip (graphics processing unit, GPU), a universal memory (universal flash storage, UFS), a receiver, a camera module, a flash module, and the like.

The circuit board holder 400 is arranged inside the housing 200. Specifically, the circuit board holder 400 may be arranged between the circuit board 300 and the back cover 210. In some embodiments, the circuit board holder 400 is fixed onto the middle plate 230. The circuit board holder 400 can cover a surface of the circuit board 300 facing the back cover 210 to protect the circuit board 300 and the electronic elements on the circuit board 300, to prevent the electronic device 10 from being damaged due to movement of some electronic elements in a process of opening the back cover 210 for maintenance.

Based on this, to enable the electronic device 10 to communicate with other device, it is also needed to arrange antennas in the electronic device 10, so that the electronic device 10 can communicate with the other devices. In some embodiments, as shown in FIG. 3, FIG. 3 is a diagram of a structure of a circuit board holder 400 according to an embodiment of this application. An LDS antenna may be formed on a plastic region (the circuit board holder 400 may further include a metal region, configured to increase overall support strength) of the circuit board holder 400 through the LDS (Laser Direct structuring, laser direct structuring) process. Alternatively, a frame 220 antenna and the like may be formed on the top frame 220.

With the trend that the electronic device 10 gradually develops toward lightweight and thinning, the electronic device 10 is increasingly thin and light, to be specific, the thickness dimension of the electronic device 10 along the Z-axis direction is increasingly small. Therefore, the circuit board holder 400 has the plastic region basically eliminated, includes only one thin metal plate, and does not support manufacturing of an LDS antenna. In addition, the frame 220 cannot carry antennas of all communication bands either.

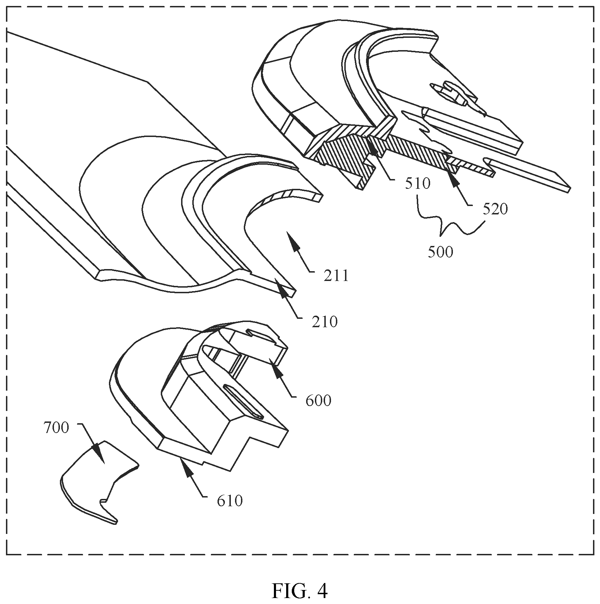

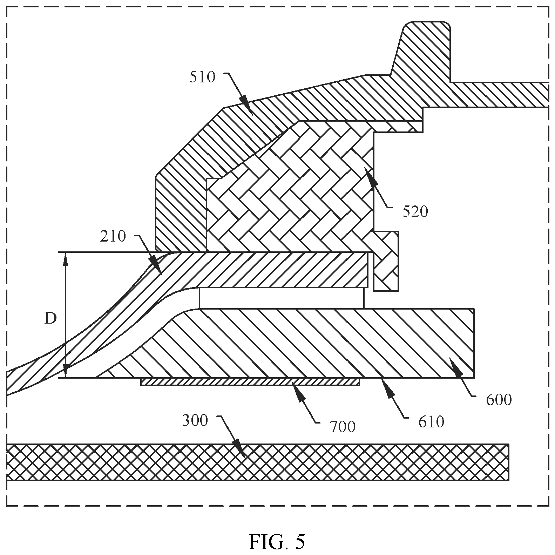

To resolve the foregoing problem, referring to FIG. 4 and FIG. 5, FIG. 4 is an exploded view of a local structure of another electronic device 10 according to an embodiment of this application, and FIG. 5 is a cross-sectional view of the local structure of the electronic device 10 provided in FIG. 4. The electronic device 10 includes the display module 100, the housing 200, and the circuit board 300. A back cover 210 of the housing 200 is provided with an installation hole 211. The installation hole 211 is configured for installing some electronic elements. For example, the installation hole 211 is configured for installing a camera module, a flash module, and the like inside. In some embodiments, the installation hole 211 may be set in different shapes based on actual requirements. For example, the installation hole 211 may be a rectangular through-hole, or may be a circular through-hole. Therefore, this is not specifically limited in this application. In all the following embodiments, description is provided by using an example in which the installation hole 211 is a circular hole, and the installation hole 211 is configured for installing a camera module inside.

The electronic device 10 further includes an outer decorative cover 500 and an inner decorative cover 600. Both the outer decorative cover 500 and the inner decorative cover 600 are arranged at the installation hole 211, the outer decorative cover 500 is fixed to an outer side of the back cover 210, and the inner decorative cover 600 is fixed to an inner side of the back cover 210.

For example, the outer decorative cover 500 may be adhered and fixed to an outer wall of the back cover 210, and the outer decorative cover 500 gradually obliquely extends from the outer wall of the back cover 210 to an end of the camera module away from the back cover 210, so that a gradually obliquely extending structure can be formed between a protruding part of the camera module and the back cover 210, that is, a part of the camera module that protrudes from the back cover 210 can form a gradually expanding structure, which helps make the protruding part of the camera module and the outer decorative cover 500 form an integral structure in appearance, thereby improving the overall aesthetics.

In addition, when a user holds the electronic device 10 with a hand, the outer decorative cover 500 can support a palm of the user, to prevent discomfort caused by the protruding part of the camera module, which is beneficial to improving the user experience.

The foregoing inner decorative cover 600 may be adhered and fixed to an inner wall of the back cover 210. The inner decorative cover 600 can further limit the camera module, which is beneficial to further improving reliability of the overall structure. The inner decorative cover 600 has a first surface 610. The first surface 610 is a surface of the inner decorative cover 600 facing the circuit board 300.

For example, the outer decorative cover 500 may include a metal part 510 and a plastic part 520, and the inner decorative cover 600 may be completely made of a plastic material.

Based on this, the electronic device 10 further includes a first radiator 700. The first radiator 700 is arranged on a surface of the inner decorative cover 600 away from the outer decorative cover 500, that is, the first radiator 700 is arranged on the first surface 610 of the inner decorative cover 600, and the first radiator 700 is electrically connected to the circuit board 300. That is, the first radiator 700 is a radiator of an antenna, to implement communication through the antenna.

In this way, because there is a gap space between the inner decorative cover 600 and the circuit board 300, arranging the first radiator 700 on the inner surface of the inner decorative cover 600 can ensure a clearance region of the antennas, thereby helping improve the radiation efficiency of the antennas. In addition, the first radiator 700 is arranged on the inner surface of the inner decorative cover 600, so that the first radiator 700 does not need to occupy an area on the circuit board 300, thereby helping improve integration of the electronic elements on the circuit board 300.

Moreover, arranging the first radiator 700 on the inner decorative cover 600 does not affect the overall appearance of the electronic device 10, that is, the flatness of the outer surfaces of the back cover 210 and the outer decorative cover 500 is not affected, and no imprint is formed on the outer wall of the back cover 210, thereby helping improve the overall aesthetics of the electronic device 10.

In addition, a vertical projection of the first radiator 700 on the circuit board 300 at least partially overlaps with a vertical projection of the metal part 510 of the outer decorative cover 500 on the circuit board 300. Therefore, the first radiator 700 can further be spatially coupled to the metal part 510 of the outer decorative cover 500, so that electromagnetic wave energy is coupled from the first radiator 700 to the metal part 510 of the outer decorative cover 500, to excite high-order modes of the metal part 510 of the outer decorative cover 500, so that the metal part 510 of the outer decorative cover 500 is referred to as a new radiator, and higher antenna efficiency can be obtained. In some examples, the first radiator 700 may be arranged on a side of the first surface 610 close to an outer edge of the inner decorative cover 600. Since a middle part of the inner decorative cover 600 is configured to accommodate the camera module, the inner decorative cover 600 has a ring-shaped structure. Moreover, arranging the first radiator 700 on a side of the first surface 610 close to the outer edge can reduce a probability that the first radiator 700 has a structural conflict with the camera module or another electronic element accommodated in the middle part, thereby helping improve the reliability of the overall structure.

In some other examples, still referring to FIG. 4 and FIG. 5, a distance between the first radiator 700 and the outer decorative cover 500 is a first distance D. The first distance D may be greater than 0 and less than or equal to 0.15 *λ*ᵣ. The first distance may be calculated according to a calculation formula ${λ}_{r} = {λ}_{0} / \sqrt{{ε}_{r}}$ of a medium wavelength.

*λ*ᵣ is a wavelength in a medium, *λ*₀ is a wavelength in vacuum, and *ε*ᵣ is a dielectric constant in the medium. In addition, the medium is a material located between the first radiator 700 and the metal part 510 of the outer decorative cover 500.

In addition, to further improve between the first radiator 700 and the metal part 510 of the outer decorative cover 500, the first distance D may be greater than or equal to 0.02 *λ*ᵣ and less than or equal to 0.15 *λ*ᵣ. For example, the first distance D may be 2 mm, and is about 0.06 *λ*ᵣ.

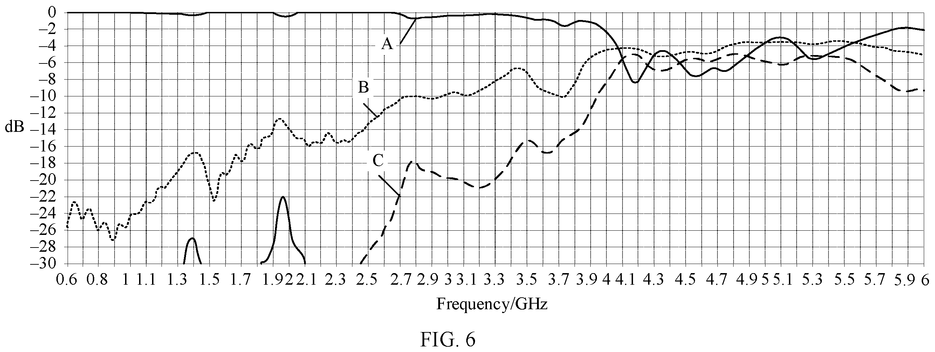

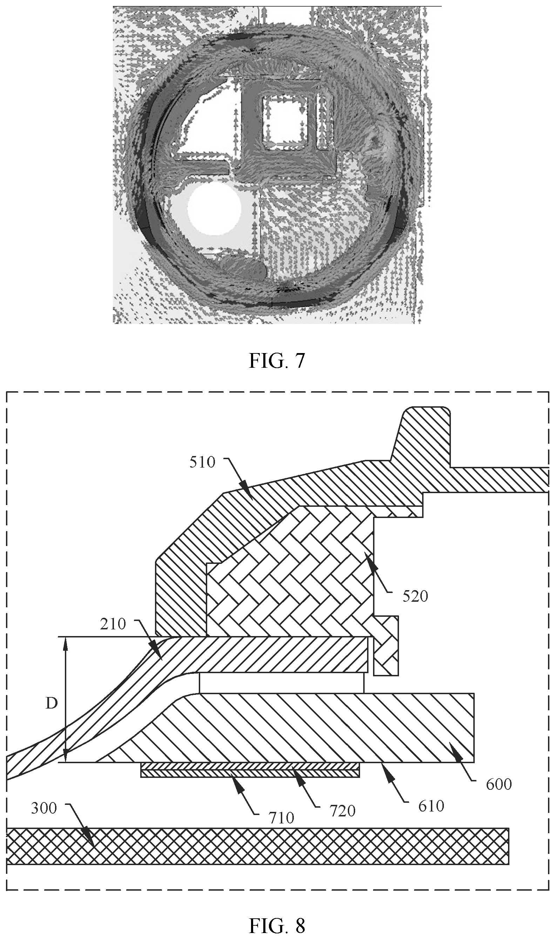

Based on this, referring to FIG. 6 and FIG. 7, FIG. 6 is a schematic diagram of simulation of an S-parameter and efficiency of a first radiator 700 according to an embodiment of this application, and FIG. 7 is a schematic diagram of current distribution after a first radiator 700 is coupled to a metal part 510 of an outer decorative cover 500 according to an embodiment of this application.

The simulation test is performed by using an N79 antenna. A curve A in FIG. 6 represents an S-parameter curve of the antenna, a curve B represents a system radiation efficiency curve, and a curve C represents a total system efficiency curve. In view of the above, the system efficiency of the antenna is -5.5 dB, and it can be learned from the current distribution in FIG. 7 that energy of the first radiator 700 has been coupled to the metal part of the outer decorative cover 500, thereby helping improve performance of the antenna.

In some embodiments, the first radiator 700 may be an FPC board (flexible printed circuit, flexible circuit board 300), that is, the FPC board is fixed to the first surface 610 of the inner decorative cover 600. Alternatively, the first radiator 700 may be a steel sheet, that is, the steel sheet is embedded in the inner decorative cover 600 by injection molding. Still alternatively, the first radiator 700 may be a metal layer, that is, a metal layer, such as a silver paste, is formed on the inner surface of the inner decorative cover 600 through the LDS process. Then, the first radiator 700 is electrically connected to the circuit board 300, to form a radiator of the antenna, so that the electronic device 10 can communicate normally.

For example, an example in which the first radiator 700 is an FPC board is used. Referring to FIG. 8, FIG. 8 is a diagram of a structure of a first radiator 700 according to an embodiment of this application. The first radiator 700 includes a first FPC board 710. The first FPC board 710 may be fixedly connected to the first surface 610 of the inner decorative cover 600 by adhesion. This solution has a simple overall structure, has low process difficulty, and is beneficial to saving space on the circuit board 300.

In addition, still referring to FIG. 8, the first radiator 700 may further include a reinforcing plate 720. The reinforcing plate 720 is arranged between the first FPC board 710 and the inner decorative cover 600, to improve overall strength of the first FPC board 710, which helps improve reliability of the overall structure. For example, if the reinforcing plate 720 is arranged, the reinforcing plate 720 may be fixed to the first surface 610 through adhesion, and the first FPC board 710 may also be fixed to the reinforcing plate 720 through adhesion.

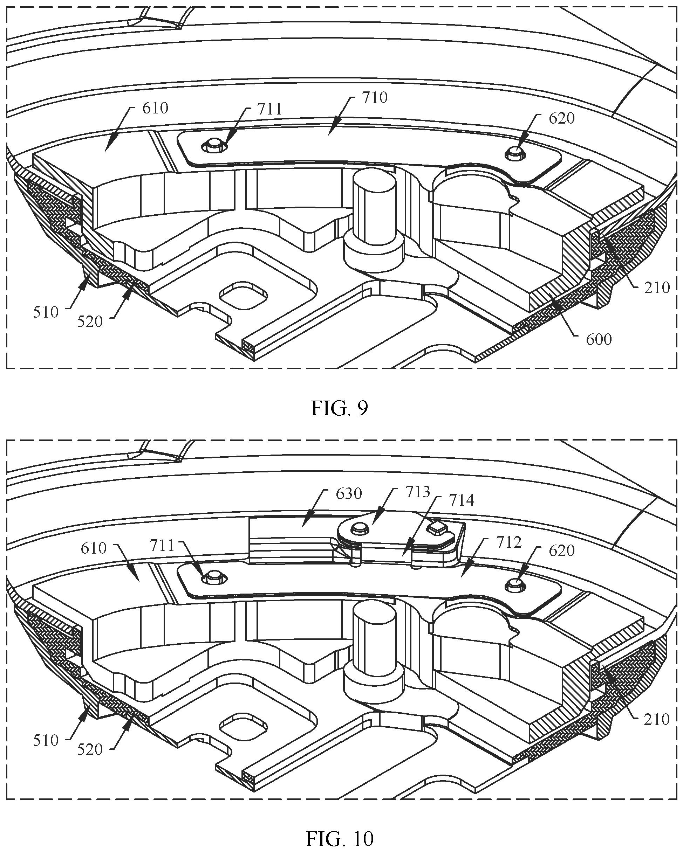

In addition, referring to FIG. 9 in combination with FIG. 8, FIG. 9 is a diagram of a structure of another first radiator 700 according to an embodiment of this application. To ensure accurate positioning of the first radiator 700 (that is, the first FPC board 710 and the reinforcing plate 720), a plurality of limiting protrusions 620 may be arranged on the inner decorative cover 600, and a plurality of limiting holes 711 may be correspondingly provided on the first FPC board 710 and the reinforcing plate 720. The limiting holes 711 are arranged in a one-to-one correspondence with the limiting protrusions 620. The limiting protrusions 620 extend into the corresponding limiting holes 711. In this way, during installation, a position of the first radiator 700 can be accurately positioned, which helps the first radiator 700 be electrically connected to the circuit board 300 in a subsequent process.

It may be understood that, that a plurality of limiting holes 711 are correspondingly provided on the first FPC board 710 and the reinforcing plate 720 means that, the first FPC board 710 and the reinforcing plate 720 are each provided with the limiting holes 711, and the limiting holes 711 on the first FPC board 710 are arranged in a one-to-one correspondence with the limiting holes 711 on the reinforcing plate 720. That is, the limiting holes 711 on the first FPC board 710, the limiting holes 711 on the reinforcing plate 720, and the limiting protrusions 620 have the same quantity and corresponding positions, so that the limiting protrusions 620 can extend into the corresponding limiting holes 711 on the reinforcing plate 720 and the corresponding limiting holes 711 on the first FPC board 710.

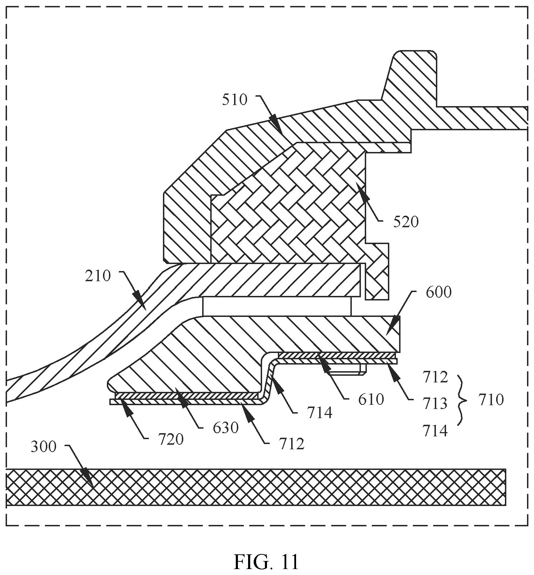

In some other embodiments, referring to FIG. 10 and FIG. 11, FIG. 10 is a diagram of a structure of still another first radiator 700 according to an embodiment of this application, and FIG. 11 is a cross-sectional view of the first radiator 700 provided in FIG. 10. A fixing boss 630 may be formed on the first surface 610 of the inner decorative cover 600. The fixing boss 630 is located at an outer edge of the first surface 610, and the fixing boss 630 extends toward the circuit board 300. The first FPC board 710 may include a first part 712, a second part 713, and a connecting part 714 connected between the first part 712 and the second part 713. The first part 712 snugly fits and is fixed to a surface of the fixing boss 630 facing the circuit board 300. The second part 713 snugly fits and is fixed to the first surface 610. The connecting part 714 snugly fits a side wall of the fixing boss 630.

In this way, a distance between the first part 712 of the first FPC board 710 and the circuit board 300 can be reduced through the fixing boss 630, so that an electrical connection between the PFC board and the circuit board 300 can be implemented through the first part 712. In addition, the second part 713 may extend on the first surface 610 of the inner decorative cover 600 to the surroundings in a direction parallel to the first surface 610, thereby increasing the area of the first FPC board 710. That is, the first part 712 is configured to implement an electrical connection between the first FPC board 710 and the circuit board 300, and the second part 713 is configured to implement signal radiation of the antenna radiator. While radiation strength of the antenna radiator is improved, a distance between the first part 712 and the circuit board 300 can also be reduced, thereby reducing process difficulty of the electrical connection between the first part 712 and the circuit board 300.

In addition, the foregoing limiting holes 711 may be provided on the first part 712, or may be provided on the second part 713, or the limiting holes 711 may be provided on both the first part 712 and the second part 713.

Moreover, the foregoing reinforcing plate 720 may have a completely same structure as the first FPC board 710, that is, separately supports the first part 712, the connecting part 714, and the second part 713 of the first FPC board 710. Alternatively, the reinforcing plate 720 may be arranged corresponding to only the second part 713. That is, the reinforcing plate 720 is arranged between the second part 713 of the first FPC board 710 and the first surface 610, to support the second part 713, which has a larger area, of the first FPC board 710. Still alternatively, the reinforcing plate 720 may be arranged separately corresponding to the first part 712 and the second part 713 of the first FPC board 710, to support both the first part 712 and the second part 713, as shown in FIG. 11. Therefore, this is not specifically limited in this application.

It should be noted that, if the reinforcing plate 720 is correspondingly arranged for only the second part 713 of the first FPC board 710, and the limiting holes 711 are also provided on the first part 712 of the first FPC board 710, the limiting protrusions 620 arranged on the fixing boss 630 extend into the limiting holes 711 on the first part 712 of the first FPC board 710. In addition, the limiting protrusions 620 on the first surface 610 extend into corresponding limiting holes 711 on the reinforcing plate 720 and corresponding limiting holes 711 on the second part 713 of the first FPC board 710.

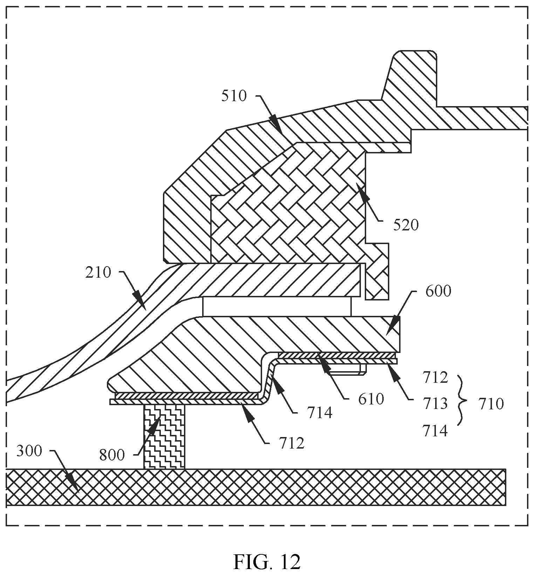

Based on this, referring to FIG. 12, FIG. 12 is a diagram of a structure that a first FPC board 710 is connected to a circuit board 300 by an electrical connector 800 according to an embodiment of this application. To implement an electrical connection between the first FPC board 710 and the circuit board 300, the electronic device 10 may further include an electrical connector 800. The electrical connector 800 is abutted between the first FPC board 710 and the circuit board 300, that is, the electrical connector 800 is abutted between the first FPC board 710 and the circuit board 300, so that the electrical connection between the first FPC board 710 and the circuit board 300 is implemented through the electrical connector 800. For example, the electrical connector 800 may be a wire, an elastic sheet 810, or an electrical connecting structure in another form.

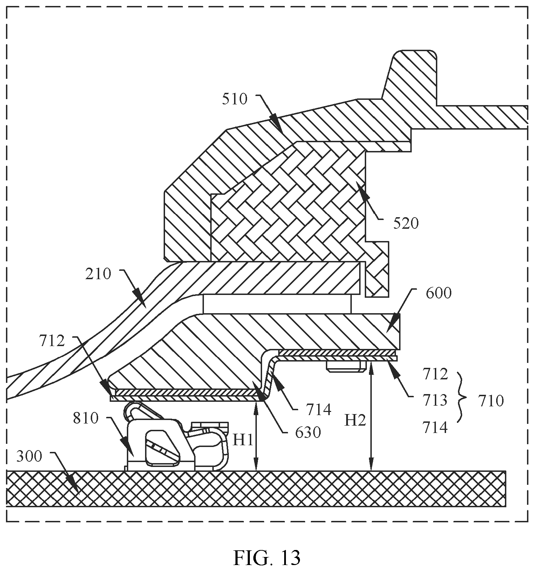

Specifically, an example in which the electrical connector 800 is an elastic sheet 810 is used. Referring to FIG. 13, FIG. 13 is a diagram of a structure that a first FPC board 710 is connected to a circuit board 300 by an elastic sheet 810 according to an embodiment of this application. The elastic sheet 810 may be welded and fixed to the circuit board 300. One end of the elastic sheet 810 away from the circuit board 300 is abutted against the first FPC board 710. Because the elastic sheet 810 is elastic, the elastic sheet 810 can be elastically deformed after being abutted against the first FPC board 710. The elastic force can make the elastic sheet 810 stably abutted against the first FPC board 710, thereby implementing a stable electrical connection between the first FPC board 710 and the circuit board 300.

Alternatively, the elastic sheet 810 may be welded and fixed to the first FPC board 710, and the other end thereof is abutted against the circuit board 300, to implement a stable electrical connection between the first FPC board 710 and the circuit board 300. This is not specifically limited in this embodiment of this application. In addition, in the following embodiments, description is provided by using an example in which the elastic sheet 810 is welded and fixed to the circuit board 300, and the other end thereof is abutted against the first FPC board 710.

To ensure that the elastic sheet 810 forms a stable connection structure between the first FPC board 710 and the circuit board 300, the elastic sheet 810 needs to have stable support strength. That is, a larger distance between the first FPC board 710 and the circuit board 300 indicates a larger overall volume of the elastic sheet 810, so that it can be ensured that the elastic sheet 810 forms stable support between the two, thereby ensuring a stable electrical connection between the first FPC board 710 and the circuit board 300.

Based on this, referring to FIG. 13, the foregoing elastic sheet 810 may be abutted between the first part 712 of the first FPC board 710 and the circuit board 300. Because the first part 712 is fixed to the fixing boss 630, that is, a distance H1 between the first part 712 and the circuit board 300 is less than a distance H2 between the second part 713 and the circuit board 300. Therefore, the elastic sheet 810 is abutted between the first part 712 of the first FPC board 710 and the circuit board 300, so that a volume of the elastic sheet 810 can be reduced, thereby helping reduce an area occupied by the elastic sheet 810 on the circuit board 300 and helping save space on the circuit board 300.

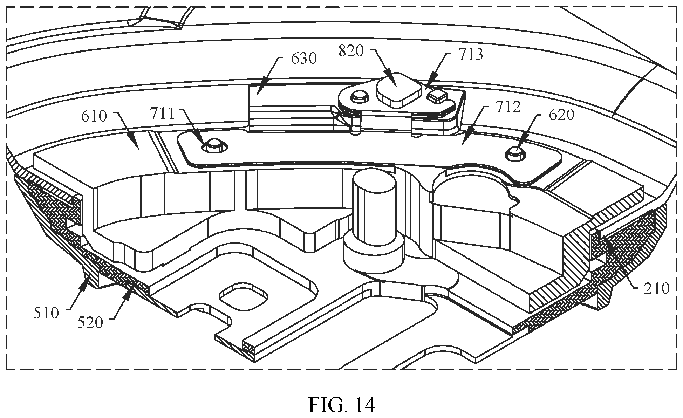

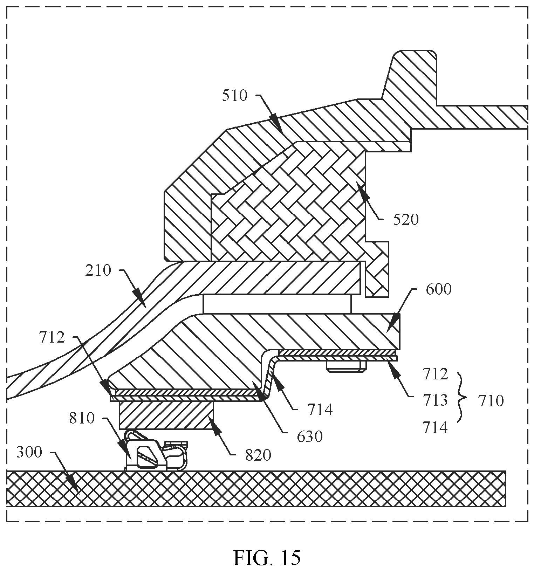

Based on this, referring to FIG. 14 and FIG. 15, FIG. 14 is a diagram of a structure that a first FPC board 710 is connected to a circuit board 300 by an elastic sheet 810 and a metal block 820 according to an embodiment of this application, and FIG. 15 is a cross-sectional view of that the first FPC board 710 is connected to the circuit board 300 by the elastic sheet 810 and the metal block 820 provided in FIG. 14. To further reduce a volume of the elastic sheet 810, the electronic device 10 provided in this embodiment of this application may further include a metal block 820. The metal block 820 is arranged on the surface of the first FPC board 710 facing the circuit board 300. The elastic sheet 810 is abutted between the metal block 820 and the circuit board 300. For example, the metal block 820 may be welded and fixed to the first part 712 of the first FPC board 710, and the elastic sheet 810 is abutted against the metal block 820.

In this way, the metal block 820 is welded to the first part 712 of the first FPC board 710, so that the metal block 820 is electrically connected to the first FPC board 710. A distance between the metal block 820 and the circuit board 300 is smaller than a distance between the first part 712 of the first FPC board 710 and the circuit board 300. That is, the distance between the first FPC board 710 and the circuit board 300 is further reduced through the metal block 820. Therefore, the volume of the elastic sheet 810 abutted between the metal block 820 and the circuit board 300 can be further reduced, thereby further reducing the area occupied by the elastic sheet 810 on the circuit board 300.

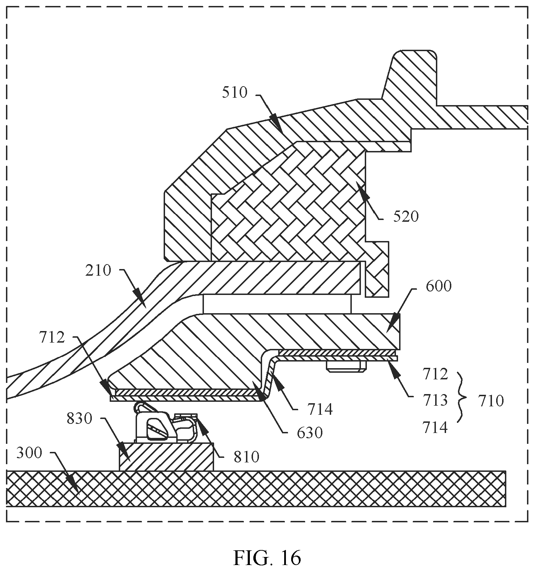

In another possible embodiment, the electronic device 10 may include a heightening plate 830. Referring to FIG. 16, FIG. 16 is a diagram of a structure that a first FPC board 710 is connected to a circuit board 300 by an elastic sheet 810 and a heightening plate 830 according to an embodiment of this application. The heightening plate 830 is arranged on the surface of the circuit board 300 facing the inner decorative cover 600, and the elastic sheet 810 is abutted between the heightening plate 830 and the first part 712 of the first FPC board 710. That is, a heightening plate 830 is arranged on the circuit board 300 to reduce the distance between the circuit board 300 and the first FPC board 710, and the elastic sheet 810 is welded and fixed to the heightening plate 830, thereby reducing the volume of the elastic sheet 810.

For example, the foregoing heightening plate 830 may form, together with the circuit board 300, an integral structure. That is, when the circuit board 300 is processed, a surface of the circuit board 300 is provided with a locally raised region, to form the foregoing heightening plate 830. Alternatively, the heightening plate 830 may be fixed to the surface of the circuit board 300 by welding. Therefore, this is not specifically limited in this application.

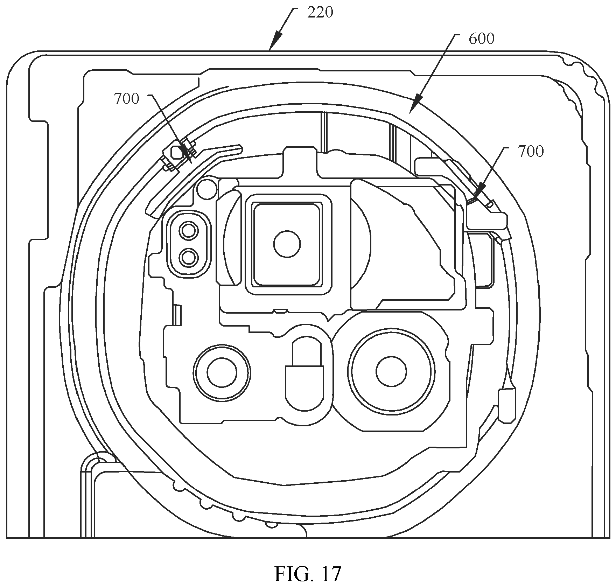

In some other embodiments, referring to FIG. 17, FIG. 17 is a diagram of a local structure of still another electronic device 10 according to an embodiment of this application. A plurality of first radiators 700 may also be provided. The plurality of first radiators 700 are arranged on the inner decorative cover 600, and are distributed at intervals along a circumferential direction of the installation hole 211. In this way, a plurality of first radiators 700 may be arranged on the inner decorative cover 600, that is, a plurality of antennas are formed, to satisfy different communication bands of the electronic device 10.

In addition, the plurality of first radiators 700 arranged on the inner decorative cover 600 may have a same structure. For example, the plurality of first radiators 700 are all the foregoing FPC board fixed by adhesion. Alternatively, the plurality of first radiators 700 may have different structures. For example, some first radiators 700 are the foregoing FPC board fixed through adhesion, some first radiators 700 are the foregoing steel sheet embedded in the inner decorative cover 600, and some first radiators 700 are the foregoing metal layer formed through the LDS process.

In addition, a same connection structure may be used for different connection manners between the first radiator 700 and the circuit board 300. For example, the electrical connection is implemented through the foregoing elastic sheet 810. Alternatively, different connection structures may be used. For example, one first radiator 700 is connected to the circuit board 300 by the elastic sheet 810, and another first radiator 700 is connected to the circuit board 300 by the elastic sheet 810 and the metal block 820. Therefore, this is not specifically limited in this application.

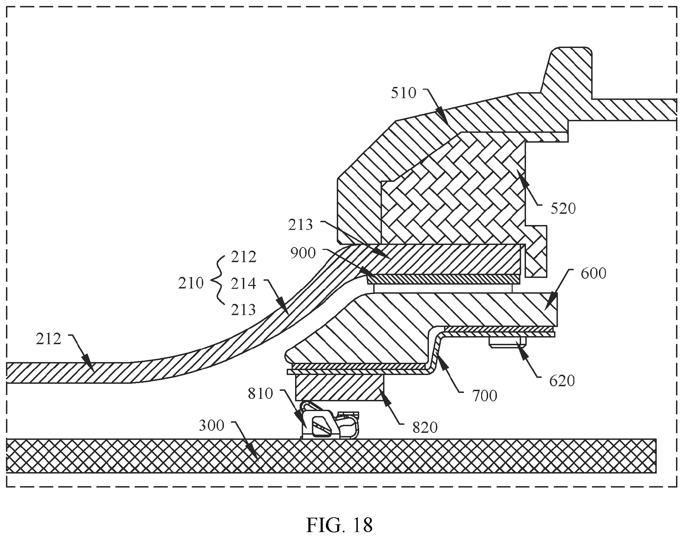

Based on the foregoing embodiments, the electronic device 10 provided in this embodiment of this application may further include a second radiator 900. Referring to FIG. 18, FIG. 18 is a cross-sectional view of a structure of a second radiator 900 according to an embodiment of this application. The second radiator 900 is arranged on an inner surface of the back cover 210, and a vertical projection of the second radiator 900 on the circuit board 300 at least partially overlaps with the vertical projection of the first radiator 700 on the circuit board 300.

In this way, the first radiator 700 may be spatially coupled to the second radiator 900, so that electromagnetic wave energy is coupled from the first radiator 700 to the second radiator 900, and radiated to the outside of the back cover 210. That is, the radiation area of the antennas is increased through the second radiator 900, thereby facilitating further improving the radiation efficiency.

Specifically, the back cover 210 may include a first region 212, a second region 213, and a bending region 214. The bending region 214 is connected between the first region 212 and the second region 213. The second region 213 protrudes from an outer surface of the first region 212. The installation hole 211 is provided in the second region 213. The outer decorative cover 500 is fixed to an outer surface of the second region 213. The inner decorative cover 600 is fixed to an inner surface of the second region 213.

The second radiator 900 may be arranged on an inner surface of the second region 213, so that vertical projections of the first radiator 700 arranged on the inner decorative cover 600 and the second radiator 900 on the circuit board 300 can have an overlapping region, and space coupling can be performed between the first radiator 700 and the second radiator 900.

In addition, the first region 212 and the second region 213 of the back cover 210 are connected by the bending region 214, so that the bending region 214 and the outer decorative cover 500 form a continuous obliquely extending surface, and the obliquely extending surface may form a small oblique angle. That is, it is beneficial to making the protruding structure formed on the back cover 210 of the electronic device 10 closer to an integral structure, thereby further improving the overall aesthetics of the electronic device 10.

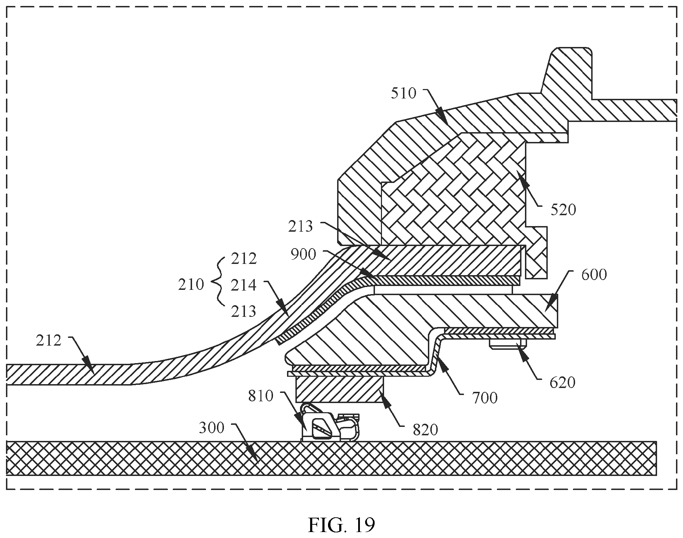

In some embodiments, to further improve a radiation area of the antennas, referring to FIG. 19, FIG. 19 is a cross-sectional view of a structure of another second radiator 900 according to an embodiment of this application. The second radiator 900 may extend to the bending region 214 in a direction away from the installation hole 211, to further increase a radiation area of the antennas, to further improve radiation efficiency, thereby improving the communication performance of the antennas.

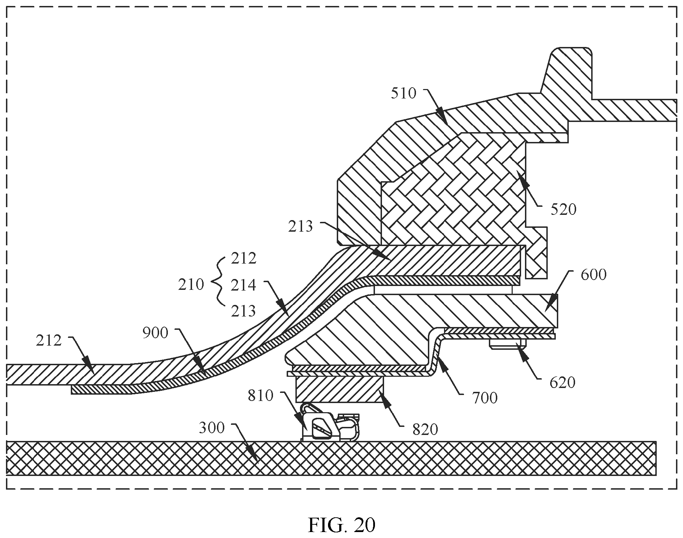

In some other possible embodiments, referring to FIG. 20, FIG. 20 is a cross-sectional view of a structure of still another second radiator 900 according to an embodiment of this application. The second radiator 900 may further extend to the first region 212 in a direction away from the installation hole 211, so that the radiation area of the antennas can be further increased.

For example, the second radiator 900 may be a metal layer, for example, a silver paste layer, formed on an inner surface of the back cover 210 by using the LDS process. The metal layer forms the second radiator 900 and is spatially coupled to the first radiator 700.

In some other possible examples, the second radiator 900 may also be the foregoing FPC board, and the FPC board is adhered and fixed to the inner surface of the back cover 210. Alternatively, the second radiator 900 may be a steel sheet embedded in the back cover 210. Therefore, this is not specifically limited in this application.

Based on this, the first radiators 700 and the second radiators 900 may be set to have a same quantity, and may be arranged in a one-to-one correspondence, that is, one second radiator 900 is correspondingly arranged for each first radiator 700. Alternatively, the first radiators 700 and the second radiators 900 may have different quantities. That is, second radiators 900 are correspondingly arranged for some first radiators 700, and some first radiators 700 are coupled to only the metal part 510 of the outer decorative cover 500.

In addition, the first radiator 700 and the second radiator 900 that are correspondingly arranged may have a completely same structure. For example, the first radiator 700 and the second radiator 900 may both be the foregoing FPC board. Alternatively, the first radiator 700 and the second radiator 900 may both be the foregoing metal layer or the like formed through the LDS process.

The first radiator 700 and the second radiator 900 that are correspondingly arranged may alternatively have different structures. For example, the first radiator 700 may be the foregoing FPC board adhered and fixed to the inner decorative cover 600, and the second radiator 900 may be the metal layer formed on the inner surface of the back cover 210 through the LDS process.

In addition, when first radiators 700 and second radiators 900 are correspondingly arranged in a plurality of sets, the first radiators 700 and the second radiators 900 in the plurality of sets may have a completely same structure. For example, in each set, both the first radiator 700 and second radiator 900 are the foregoing FPC board. Alternatively, the first radiators 700 and the second radiators 900 in the plurality of sets may have different structures. For example, in one set, both the first radiator 700 and the second radiator 900 are an FPC board. In another set, both the first radiator 700 and the second radiator 900 are a metal layer. In still another set, the first radiator 700 is a steel sheet, and the second radiator 900 is a metal layer. Therefore, specific quantities and structural forms of the first radiators 700 and the second radiators 900 are not specifically limited in this application.

In the descriptions of this specification, the specific features, structures, materials, or characteristics may be combined in a proper manner in any one or more of embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be determined by the protection scope of the claims.

## Claims

1. An electronic device, comprising:
a back cover, provided with an installation hole;
an outer decorative cover, arranged at the installation hole and arranged on an outer side of the back cover;
an inner decorative cover, arranged at the installation hole and arranged on an inner side of the back cover;
a first radiator, arranged on a surface of the inner decorative cover away from the outer decorative cover; and
a circuit board, arranged on an inner side of the back cover, wherein the first radiator is electrically connected to the circuit board.

2. The electronic device according to claim 1, wherein the outer decorative cover comprises a metal part and a plastic part, wherein the metal part is fixedly connected to the plastic part, and a vertical projection of the metal part on the circuit board at least partially overlaps with a vertical projection of the first radiator on the circuit board.

3. The electronic device according to claim 2, wherein along a thickness direction of the electronic device, a distance between the first radiator and the metal part is a first distance, and the first distance is greater than 0 and less than or equal to 0.15 *λ*ᵣ, wherein *λ*ᵣ is a wavelength in a medium.

4. The electronic device according to claim 3, wherein the first distance is greater than or equal to 0.02 *λ*ᵣ and less than or equal to 0.15*λ*ᵣ.

5. The electronic device according to any one of claims 1 to 4, wherein a surface of the inner decorative cover facing the circuit board is a first surface, and the first radiator is arranged on the first surface and is located on a side close to an outer edge of the outer decorative cover.

6. The electronic device according to any one of claims 1 to 5, further comprising an electrical connector, wherein the electrical connector is abutted between the first radiator and the circuit board.

7. The electronic device according to claim 6, further comprising a metal block, wherein the metal block is fixed on a surface of the first radiator facing the circuit board, and the electrical connector is abutted between the metal block and the circuit board.

8. The electronic device according to claim 6, further comprising a heightening plate, wherein the heightening plate is arranged on a surface of the circuit board facing the inner decorative cover, the heightening plate is electrically connected to the circuit board, and the electrical connector is abutted between the heightening plate and the first radiator.

9. The electronic device according to any one of claims 1 to 8, wherein the first radiator comprises an FPC board, wherein the FPC board is fixed to the surface of the inner decorative cover away from the outer decorative cover.

10. The electronic device according to claim 9, wherein the first radiator further comprises a reinforcing plate, wherein the reinforcing plate is arranged between the FPC board and the inner decorative cover.

11. The electronic device according to claim 10, wherein a plurality of limiting protrusions are arranged on the inner decorative cover, the FPC board and the reinforcing plate are each provided with a plurality of limiting holes, the plurality of limiting holes are arranged in a one-to-one correspondence with the plurality of limiting protrusions, and the limiting protrusions extend into the corresponding limiting holes.

12. The electronic device according to any one of claims 1 to 8, wherein the first radiator comprises a steel sheet, wherein the steel sheet is arranged on the inner decorative cover.

13. The electronic device according to any one of claims 1 to 8, wherein the first radiator comprises a metal layer, wherein the metal layer is arranged on the surface of the inner decorative cover away from the outer decorative cover.

14. The electronic device according to any one of claims 1 to 13, wherein a plurality of first radiators are arranged, and the plurality of first radiators are distributed at intervals along a circumferential direction of the installation hole.

15. The electronic device according to any one of claims 1 to 14, further comprising a second radiator, wherein the second radiator is arranged on an inner surface of the back cover, and a vertical projection of the second radiator on the circuit board at least partially overlaps with the vertical projection of the first radiator on the circuit board.

16. The electronic device according to claim 15, wherein the back cover comprises a first region, a second region, and a bending region, wherein the bending region is connected between the first region and the second region, the second region protrudes from an outer surface of the first region, the installation hole is arranged in the second region, both the outer decorative cover and the inner decorative cover are fixedly connected to the second region, and the second radiator is arranged on an inner surface of the second region.

17. The electronic device according to claim 16, wherein the second radiator extends to the bending region in a direction away from the installation hole.

18. The electronic device according to claim 16, wherein the second radiator extends to the first region in a direction away from the installation hole.
